# EUROPEAN PATENT APPLICATION

(11) **EP 4 343 145 A1**
(43) Date of publication of application: **27.03.2024**
(21) Application number: 23382628.8
(22) Date of filing: 21.06.2023
(51) Int. Cl.: F03D 13/20, F03D 13/10

(54) **SET OF CONCRETE SEGMENTS OF ADJACENT SECTIONS OF A WIND TURBINE TOWER, AND METHOD OF ASSEMBLING A WIND TURBINE**

(30) Priority: 26.09.2022 ES ES
(71) Applicant: Nordex Energy Spain, S.A.U., 31395 Barasoain (Navarra) (ES)
(72) Inventor: Garduño, Aitor, Barasoain (ES); Gonzalez, Miguel, Barasoain (ES); García, Iván, Barasoain (ES); Varela, Fernando, Barasoain (ES); Arlabán, Teresa, Barasoain (ES)
(74) Representative: Pons

(57) **Abstract**

The object of the invention is a set of concrete segments of adjacent sections of a wind turbine tower which minimizes the undesirable local effects in the connection area of the upper concrete section and the adapter, and in the connection area of the upper concrete section and the section disposed immediately below, and also a set of sections comprising at least two concrete segments of the upper concrete section and at least two concrete segments of the section disposed immediately below, a tower comprising at least a set of sections and a method of assembling a wind turbine.

## Description

### OBJECT OF THE INVENTION

The object of the invention is a set of concrete segments of adjacent sections of a wind turbine tower which minimizes the undesirable local effects in the connection area of the upper concrete section and the adapter, and in the connection area of the upper concrete section and the section disposed immediately below.

The invention also relates to a set of sections comprising at least two concrete segments of the upper concrete section and at least two concrete segments of the section disposed immediately below, a tower comprising at least a set of sections and a method of assembling a wind turbine.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those for the production of steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

The design of wind turbine components and the design of the connections between them once placed, should take into account the loads they will have to bear throughout their useful life to ensure the proper functioning thereof. In particular, the connections between different concrete sections of the tower or between an upper concrete section and an adapter disposed above the upper concrete section for the transition between the concrete sections and the steel sections in the case of hybrid towers or for the transition between the concrete sections and the nacelle of the wind turbine in the case of full concrete towers, are adapted to withstand the loads they will have to bear throughout their useful life, such as gravitational loads, assembly loads, inertial loads, aerodynamic loads, operational loads and other loads that depend on the location where the wind turbine is to be installed, such as earthquakes.

Currently, some wind turbine towers with concrete segments include a geometry of the adapter which comprises a concrete part comprising an inward thickness increase towards the inside of the tower with respect to the wall thickness in a central part of the concrete part and a steel part. This inward thickness increase towards the inside of the tower is necessary for providing a wider contact area for the concrete-grout (or concrete-resin) interfaces in the horizontal joint between the concrete part and the steel part of the adapter so that the stresses can be stood by the filler material (grout or resin) used in the horizontal joints, allowing for some manufacturing or pouring deficiencies of such filler material.

However, this state-of-the-art geometry gives rise to undesirable local effects in the concrete segments, such as:
- Local bending moments in transition region from the central part and the connection area of the concrete part that increase concrete compressive stresses and that require additional reinforcement for tensile forces at the beginning of the connection area; and
- Circumferential compressive and tensile stresses close to thickness changes.

The present invention solves the problems described above by providing a set of concrete segments of an upper section and a section disposed immediately below, of a wind turbine tower which minimizes the undesirable local effects in the connection area between the upper concrete section and the adapter, and in the connection area of the upper concrete section and the section disposed immediately below.

### DESCRIPTION OF THE INVENTION

The invention relates to a set of concrete segments of adjacent sections of a wind turbine tower comprises an upper concrete segment and a lower concrete segment disposed immediately below the upper concrete segment,
wherein each one of the concrete segments comprises:
   - a central area comprising an inner surface and an outer, wherein the central area further comprises a first wall thickness defined as the distance between the inner surface and the outer surface;
wherein the upper concrete segment comprises:
   - at least one upper connection area comprising a horizontal connection flange, wherein the at least one upper connection area is configured to be connected, in use, to an adapter disposed adjacent to the at least one upper connection area, by means of the horizontal connection flange, , wherein the at least one upper connection area comprises a second wall thickness being bigger than the first wall thickness, the second wall thickness comprising an inward thickness increase with respect to the first wall thickness, and
   - at least one lower connection area comprising a horizontal connection flange;
wherein the lower concrete segment comprises:
   - at least one upper connection area comprising a horizontal connection flange, wherein the at least one upper connection area is configured to be connected, in use, to the horizontal flange of the at least one lower connection area of the upper concrete segment, wherein the at least one upper connection area comprises a second wall thickness being bigger than the first wall thickness, the second wall thickness comprising an inward thickness increase with respect to the first wall thickness,
wherein a ratio of the second wall thickness of the at least one upper connection area of the upper concrete segment, and the second wall thickness of the at least one upper connection area of the lower concrete segment is between 1,25 and 2,5, preferably between 1,75 and 2

The expression "inward thickness increase" means inward thickness increase towards the inside of the wind turbine tower, when in use, the concrete segment is disposed in the tower.

Optionally, each one of the concrete segments comprises a central surface located at the same distance from the inner surface as from the outer surface, wherein in use, a load path intended to be transmitted along the central area is coincident with the central surface.

The load path is the path that the loads of the wind turbine follow from the upper part of the wind turbine to a foundation.

The expression "central surface" is an interior surface of the concrete segment, being non-accessible, i.e., it is a virtual central surface of the concrete segment.

Preferably, in use, the central surface is coincident with a load path intended to be transmitted along the central area.

In this way, the set of concrete segments so configured provides the following structural improvements:
- The local bending is avoided, reducing drastically fatigue damage in concrete and avoiding additional local reinforcements;
- Circumferential stresses are minimized; and
- Local effects and stresses concentrations in a transition region from the central area to the connection are minimized with the new proposed geometry.
- Uncertainties and undesirable local effects are avoided.

All this is translated in either, i) less need of reinforcements at horizontal connection flange and above all, an important improvement of fatigue life in concrete, making it possible to reduce the concrete quality around 10-15 MPa (e.g., from C80 to C65) or ii) alternatively, a reduction in the thickness of the walls while keeping the same concrete quality, decreasing in this way the amount of concrete and achieving lighter upper tower sections, easier to lift with cranes, or even iii) a combination of both i) and ii).

Al least one of the concrete segments of the set of concrete segments comprises the following:

Preferably, in use, the load path intended to be transmitted along the central area is coincident with a load path intended to be transmitted along the at least one upper connection area.

Preferably, in use, the load path intended to be transmitted along the at least one upper connection area is substantially straight. More preferably, the load path intended to be transmitted along the concrete segment is substantially straight.

Optionally, the second wall thickness of the at least one upper connection area further comprises an outward thickness increase with respect to the first wall thickness for at least one of the concrete segments.

The expression "outward thickness increase" means outward thickness increase towards the outside of the wind turbine tower, when in use, the concrete segment is disposed in the tower.

Optionally, the inward thickness increase is bigger than or equal to the outward thickness increase.

Preferably, the inward thickness increase is bigger than the outward thickness increase at least in a part of the at least one upper connection area.

Also preferably, the inward thickness increase is bigger than the outward thickness increase along the whole extension of the at least one upper connection area.

Optionally, the inward thickness increase and the outward thickness increase are symmetrical with regards to the central surface.

Optionally, the inward thickness increase and the outward thickness increase are asymmetrical.

Optionally, the inward thickness increase and/or the outward thickness increase comprises at least one oblique part (transition part), wherein the thickness increases in the at least one oblique part.

Optionally, the inward thickness increase and/or the outward thickness increase comprises at least one substantially vertical part.

Preferably, the at least one substantially vertical part is adjacent to the horizontal connection flange.

Preferably, the at least one substantially vertical part is adjacent to the horizontal connection flange and follows a conicity of the tower (preferably a conicity slope between 0.5°-3° with a vertical plane).

Preferably, for the upper concrete segment, the oblique part comprises an oblique part slope, wherein the oblique part slope in the at least one connection area is between 45° and 80° with a horizontal plane, more preferably between 65° and 77° with a horizontal plane, more preferably 73° and/or for the lower concrete segment, the oblique part slope in the at least one connection area is between 70° and 89°.

Preferably, the at least one oblique part of the at least one upper connection area of the upper concrete segment comprises a height, a greater thickness, and a lower thickness, wherein a ratio between the greater thickness and the height of the at least one oblique part is between 0,4 and 0,5 and a ratio between the lower thickness and the height of the at least one oblique part is between 0,4 and 0,55.

Preferably, the at least one substantially vertical part of the at least one upper connection area of the upper concrete segment comprises a height and a thickness, wherein a ratio between the thickness and the height of the at least one substantially vertical part is between 0,9 and 1,1.

Preferably, the at least one oblique part of the at least one upper connection area of the lower concrete segment comprises a height, a greater thickness, and a lower thickness, wherein a ratio between the greater thickness and the height of the at least one oblique part is between 0,23 and 0,38 and a ratio between the lower thickness and the height of the at least one oblique part is between 0,13 and 0,23.

Preferably, the at least one substantially vertical part of the at least one upper connection area of the lower concrete segment comprises a height and a thickness, wherein a ratio between the thickness and the height of the at least one substantially vertical part is between 0,25 and 0,45.

Optionally, the at least one upper connection area comprises a height, and the concrete segment comprises a height, wherein the height of the at least one connection upper area is between 15% and 30% of the height of the concrete segment for the upper concrete segment and/or is between 5% and 12% of the height of the concrete segment for the lower concrete segment.

Optionally, the first wall thickness increases from the lower part to the upper part of the central part of the concrete segment.

Optionally, the first wall thickness is constant from the lower part to the upper part of the central part of the concrete segment.

The invention also relates to a set of sections comprising at least two concrete segments of the upper concrete section and at least two concrete segments of the section disposed immediately below, as those described above.

The invention also relates to a tower comprising at least a set of sections as described above.

The invention also relates to a wind turbine comprising a tower as described above.

The invention also relates to a method of assembling a wind turbine comprising at least a step of assembling a set of sections as described above comprising the steps of:
- raising the section disposed immediately below;
- raising the upper concrete section onto the section disposed immediately below;
- performing the horizontal joint disposed between the section disposed immediately below and the upper concrete section.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

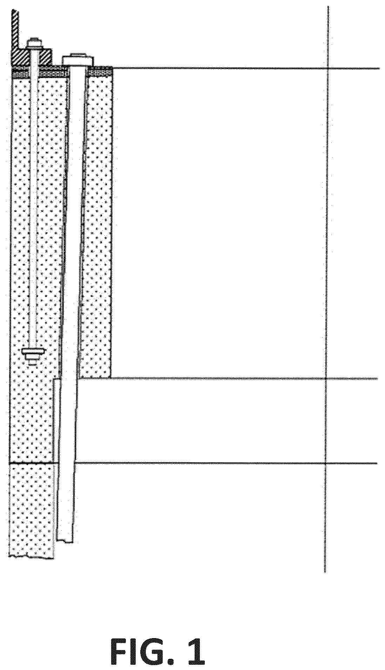

Figure 1 shows a concrete part and a steel part of an adapter of a wind turbine tower according to the state of the art, showing the eccentricity, e, of the load path coming from a steel section or a nacelle to the adapter.

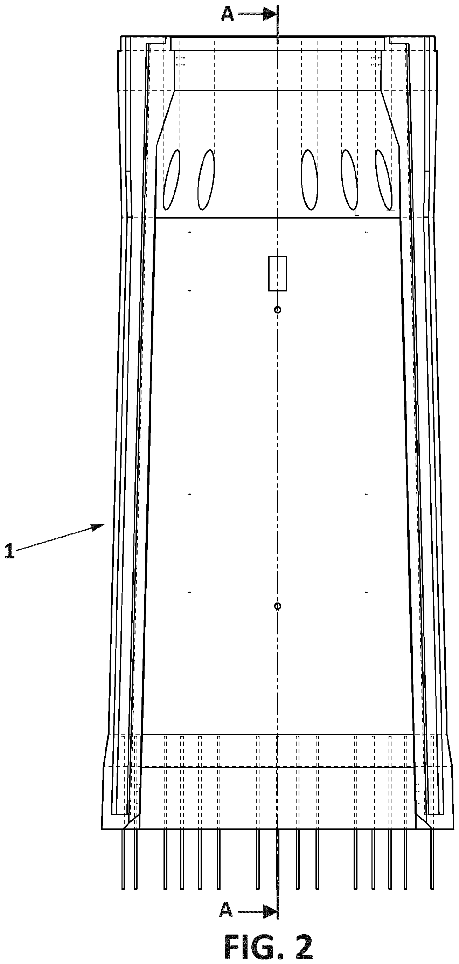

Figure 2 shows the upper concrete segment of the set of concrete segments according to the invention.

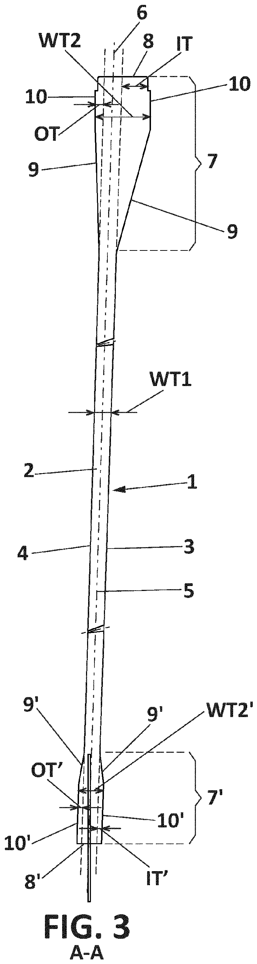

Figure 3 shows a section AA of Figure 2.
Figure 4 shows a sectioned view of the sets of concrete segments according to the invention disposed below the adapter.

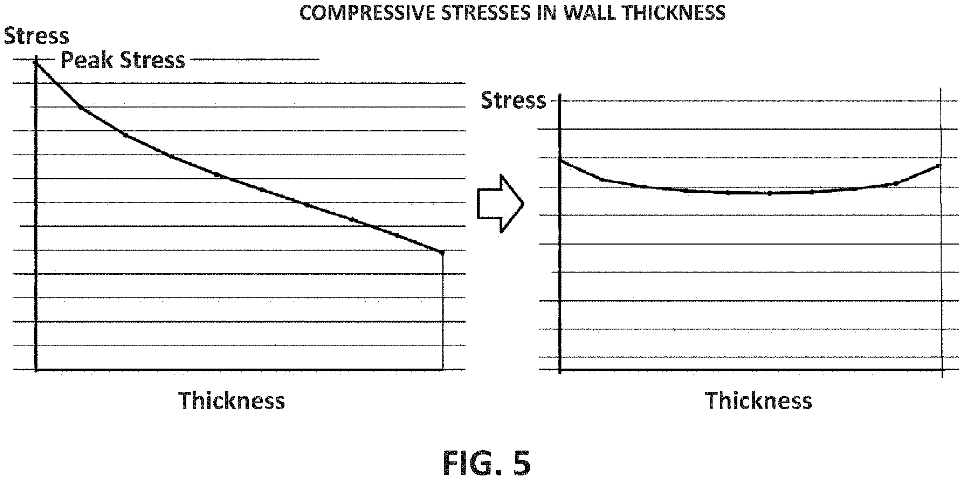

Figure 5 shows the compressive stresses in wall thickness of a concrete segment of the set of concrete segments according to a concrete segment of the state of the art (left side) and according to the invention (right side).

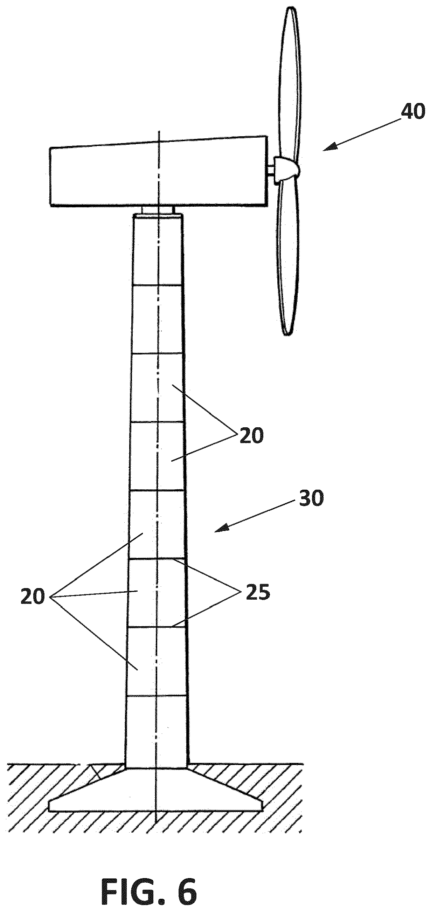

Figure 6 shows a wind turbine according to another aspect of the invention.

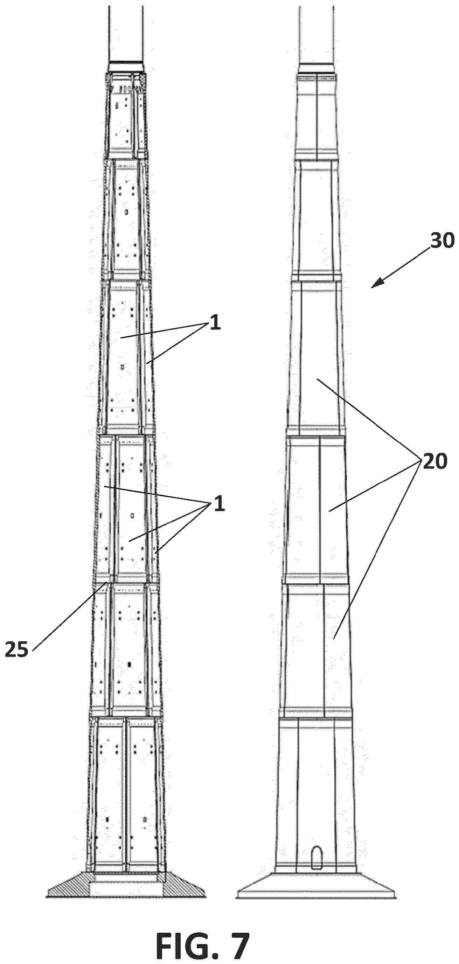

Figure 7 shows on the left side a cross-section according to a vertical plane of a tower comprising the set of sections according to the invention, and on the right side, said tower according to the invention.

### PREFERRED EMBODIMENT OF THE INVENTION

The following is a detailed description of the set of concrete segments (1, 1') of adjacent sections (20) of a wind turbine tower (30), wherein the set of concrete segments (1, 1') comprises an upper concrete segment (1) and an adjacent concrete segment (1') disposed immediate below the upper concrete segment (1),
wherein each one of the concrete segments (1, 1') comprises:
   - a central area (2) comprising an inner surface (3) and an outer surface (4), wherein the central area (2) further comprises a first wall thickness (WT1) defined as the distance between the inner surface (3) and the outer surface (4); and
wherein the upper concrete segment (1) comprises:
   - at least one upper connection area (7) comprising a horizontal connection flange (8), wherein the at least one upper connection area (7) is configured to be connected, in use, to a horizontal flange of an adjacent connection area of the adapter (55), wherein the at least one upper connection area (7) comprises a second wall thickness (WT2) being bigger than the first wall thickness (WT1), the second wall thickness (WT2) comprising an inward thickness increase (IT) with respect to the first wall thickness (WT1), and

   - at least one lower connection area (7') comprising a horizontal connection flange (8');
wherein the lower concrete segment (1') comprises:
   - at least one upper connection area (7") comprising a horizontal connection flange (8"), wherein the at least one upper connection area (7") is configured to be connected, in use, to the horizontal flange (8') of the at least one lower connection area (7') of the upper concrete segment (1), wherein the at least one upper connection area (7") comprises a second wall thickness (WT2") being bigger than the first wall thickness (WT1), the second wall thickness (WT2") comprising an inward thickness increase (IT") with respect to the first wall thickness (WT1),
wherein a ratio of the second wall thickness (WT2) of the at least one upper connection area (7) of the upper concrete segment (1), and the second wall thickness (WT2") of the at least one upper connection area (7") of the lower concrete segment (1') is between 1,75 and 2.

Al least one of the concrete segments of the set of concrete segments comprises the following:

Preferably, the concrete segment (1, 1') further comprises a central surface (5) located at the same distance from the inner surface (3) as from the outer surface (4), wherein in use, a load path (6) intended to be transmitted along the central area (2) is coincident with the central surface (5).

Preferably, the second wall thickness (WT2) of the at least one upper connection area (7) further comprises an outward thickness increase (OT) with respect to the first wall thickness (WT1);

Preferably, the inward thickness increase (IT) and/or the outward thickness increase (OT) comprises at least one oblique part (9) and at least one substantially vertical part (10) adjacent to the horizontal connection flange (8);

Preferably, the ratio of the second wall thickness (WT2) and the first wall thickness (WT1) is a ratio of the second wall thickness (WT2) in the at least one substantially vertical part (10), and the first wall thickness (WT1).

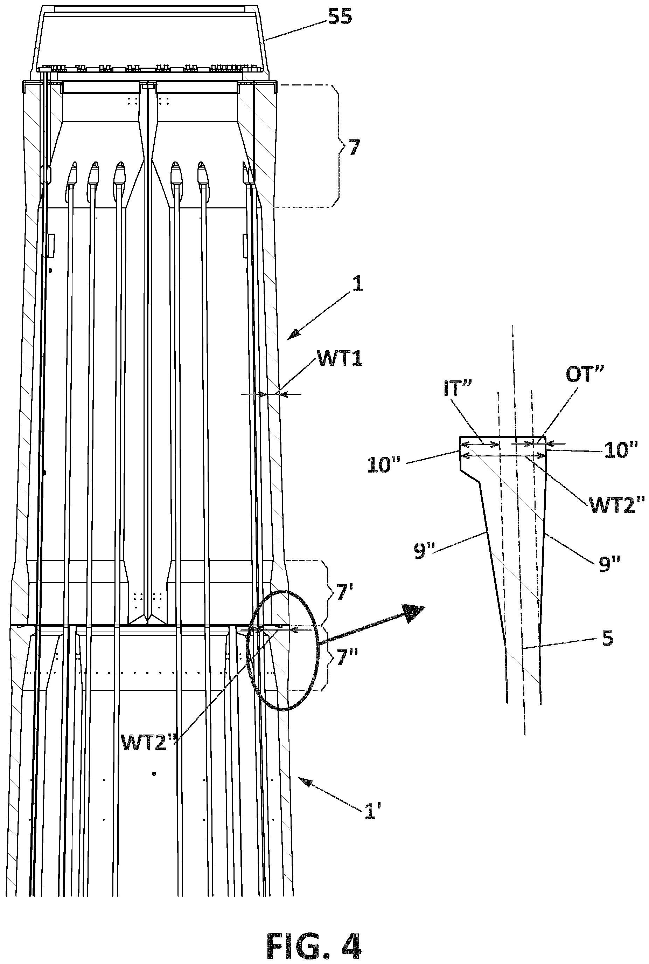

According to a first preferred embodiment shown in Figure 4, the upper concrete segment (1) comprises an upper connection area (7), wherein the inward thickness increase (IT) is bigger than the outward thickness increase (OT) along the whole of the upper connection area (7), and a lower connection area (7'), wherein the inward thickness increase (IT') is equal to the outward thickness increase (OT'). In this embodiment, the inward thickness increase (IT) and the outward thickness increase (OT) of the upper connection area (7) are asymmetrical with regards to the central surface (5), whereas the inward thickness increase (IT') and the outward thickness increase (OT') of the lower connection area are symmetrical with regards to the central surface (5). Also, the inward thickness increase (IT) of the upper connection area (7) comprises one oblique part (9) and one substantially vertical part (10), wherein the thickness increases in the one oblique part (9), whereas the outward thickness increase (OT) of the upper connection area (7) comprises one oblique part (9) and one substantially vertical part (10), wherein the thickness increases in the one oblique part (9). On the other hand, the lower concrete segment (1') comprises an upper connection area (7"), wherein the inward thickness increase (IT") is bigger than the outward thickness increase (OT") along the whole upper connection area (7"), and a lower connection area (not shown). In this embodiment, the inward thickness increase (IT) and the outward thickness increase (OT) of the upper connection area (7") of the lower concrete segment (1') are asymmetrical with regards to the central surface (5). Also, the inward thickness increase (IT) of the upper connection area (7") of the lower concrete segment (1') comprises one oblique part (9") and one substantially vertical part (10"), wherein the thickness increases in the one oblique part (9"), whereas the outward thickness increase (OT") of the upper connection area (7") comprises a first oblique part (9"), a second oblique part (11") and one substantially vertical part (10") wherein the thickness increases in the first oblique part (9") and in the second oblique part (11 ").

The invention also relates to a set of sections comprising at least two concrete segments (1) of the upper concrete section and at least two concrete segments of the section disposed immediately below as described above.

The invention also relates to a tower (30) comprising a set of sections (20) as described above.

The invention also relates to a wind turbine (40) comprising a tower (30) as described above.

## Claims

1. Set of concrete segments (1, 1') of adjacent sections (20) of a wind turbine tower (30), wherein the set of concrete segments (1, 1') comprises an upper concrete segment (1) and a lower concrete segment (1') disposed immediately below the upper concrete segment (1),
wherein each one of the concrete segments (1, 1') comprises:
- a central area (2) comprising an inner surface (3) and an outer surface (4), wherein the central area (2) further comprises a first wall thickness (WT1) defined as the distance between the inner surface (3) and the outer surface (4);
wherein the upper concrete segment (1) comprises:
- at least one upper connection area (7) comprising a horizontal connection flange (8), wherein the at least one upper connection area (7) is configured to be connected, in use, to a horizontal flange of an adjacent connection area of the adapter (55), wherein the at least one upper connection area (7) comprises a second wall thickness (WT2) being bigger than the first wall thickness (WT1), the second wall thickness (WT2) comprising an inward thickness increase (IT) with respect to the first wall thickness (WT1), and
- at least one lower connection area (7') comprising a horizontal connection flange (8');
wherein the lower concrete segment (1') comprises:
- at least one upper connection area (7") comprising a horizontal connection flange (8"), wherein the at least one upper connection area (7") is configured to be connected, in use, to the horizontal flange (8') of the at least one lower connection area (7') of the upper concrete segment (1), wherein the at least one upper connection area (7") comprises a second wall thickness (WT2") being bigger than the first wall thickness (WT1), the second wall thickness (WT2") comprising an inward thickness increase (IT") with respect to the first wall thickness (WT1),
wherein a ratio of the second wall thickness (WT2) of the at least one upper connection area (7) of the upper concrete segment (1), and the second wall thickness (WT2") of the at least one upper connection area (7") of the lower concrete segment (1') is between 1,25 and 2,5.

2. The set of concrete segments (1, 1') of claim 1, wherein the ratio of the second wall thickness (WT2) of the at least one upper connection area (7) of the upper concrete segment (1), and the second wall thickness (WT2") of the at least one upper connection area (7") of the lower concrete segment (1') is between 1,5 and 2,25, preferably between 1,75 and 2.

3. The set of concrete segments (1, 1') of any of preceding claims, wherein the second wall thickness (WT2, WT2") of the at least one upper connection area (7, 7") further comprises an outward thickness increase (OT, OT") with respect to the first wall thickness (WT1) for at least one of the concrete segments (1, 1").

4. The set of concrete segments (1, 1') of claim 3, wherein the inward thickness increase (IT, IT") is bigger than or equal to the outward thickness increase (OT, OT") for at least one of the concrete segments (1, 1").

5. The set of concrete segments (1, 1') of claim 4, wherein the inward thickness increase (IT, IT") is bigger than the outward thickness increase (OT, OT") at least in a part of the at least one upper connection area (7, 7") of at least one of the concrete segments (1, 1').

6. The set of concrete segments (1, 1') of claim 4, wherein the inward thickness increase (IT, IT") is bigger than the outward thickness increase (OT, OT") along the whole extension of the at least one upper connection area (7, 7") of at least one of the concrete segments (1, 1").

7. The set of concrete segments (1, 1') of any of the claims 1 to 6, wherein the inward thickness increase (IT, IT") and the outward thickness increase (OT, OT') are asymmetrical for at least one of the concrete segments (1, 1").

8. The set of concrete segments (1, 1') of claims 3 to 7, wherein the inward thickness increase (IT, IT") and/or the outward thickness increase (OT, OT") comprises at least one oblique part (9), wherein the thickness increases in the at least one oblique part (9, 9") for at least one of the concrete segments (1, 1").

9. The set of concrete segments (1, 1') of claim 8, wherein the at least one oblique part (9, 9") comprises an oblique part slope, wherein the oblique part slope in the at least one connection area (7) is between 45° and 80° with a horizontal plane, more preferably between 65° and 77° with a horizontal plane, more preferably 73° for the upper concrete segment (1), and/or the oblique part slope in the at least one connection area (7") is between 70° and 89° for the lower concrete segment (1').

10. The set of concrete segments (1, 1') of any of the claims 8 or 9, wherein the at least one oblique part (9) of the at least one upper connection area (7) of the upper concrete segment (1) comprises a height, a greater thickness and a lower thickness, and the at least one substantially vertical part (10) of the at least one upper connection area (7) of the upper concrete segment (1) comprises a height and a thickness, wherein a ratio between the greater thickness and the height of the at least one oblique part (9) is between 0,4 and 0,5, a ratio between the lower thickness and the height of the at least one oblique part (9) is between 0,4 and 0,55, and a ratio between the thickness and the height of the at least one substantially vertical part (10) is between 0,9 and 1,1.

11. The concrete segment (1) of any of the claims 8 to 10, wherein the at least one oblique part (9") of the at least one upper connection (7") area of the lower concrete segment (1') comprises a height, a greater thickness and a lower thickness, and the at least one substantially vertical part (10") of the at least one upper connection area (7") of the lower concrete segment (1') comprises a height and a thickness, wherein a ratio between the greater thickness and the height of the at least one oblique part (9") is between 0,23 and 0,38, a ratio between the lower thickness and the height of the at least one oblique part (9') is between 0,13 and 0,23, and a ratio between the thickness and the height of the at least one substantially vertical part (10') is between 0,25 and 0,45.

12. The set of concrete segments (1, 1') of any of preceding claims, wherein the at least one upper connection area (7, 7") comprise a height, and the concrete segment (1, 1") comprises a height, wherein the height of the at least one upper connection area (7) is between 15% and 30% of the height of the concrete segment (1) for the upper concrete segment (1) and/or the height of the at least one upper connection area (7") is between 5% and 12% of the height of the concrete segment (1') for the lower concrete segment (1').

13. Set of sections comprising at least two set of concrete segments (1, 1') of any of claims 1 to 12, being at least two upper concrete segments (1) of an upper concrete section and at least two lower concrete segments (1') of a section disposed immediately below the upper concrete section.

14. Tower (30) comprising at least a set of sections of claim 13.

15. Wind turbine (40) comprising the tower (30) of claim 14.

16. Method of assembling a wind turbine (40) comprising at least a step of assembling a set of sections of claim 13 comprising the steps of:
- raising the section disposed immediately below;
- raising the upper concrete section onto the section disposed immediately below;
- performing the horizontal joint (25) disposed between the section disposed immediately below and the upper concrete section.
